# EUROPEAN PATENT SPECIFICATION

(11) **EP 2 190 230 B1**
(45) Date of publication and mention of the grant of the patent: **01.06.2011**
(21) Application number: 10002651.7
(22) Date of filing: 05.08.2005
(51) Int. Cl.: H04W 8/16, H04W 12/02

(54) **User privacy management apparatus and method in mobile communications system**
Verwaltungsvorrichtung und -verfahren der Benutzer-Privatsphäre in einem Mobilkommunikationssystem
Appareil et procédé de gestion de la confidentialité d'utilisateur dans un système de communication mobile

(30) Priority: 06.08.2004 KR 20040062144; 26.10.2004 KR 20040085958
(43) Date of publication of application: 26.05.2010
(62) Divisional of application: 05774222.3
(73) Proprietor: LG Electronics Inc., Seoul 150-010 (KR)
(72) Inventor: Shim, Dong-Hee, Yongdungpo-Gu Seoul (KR)
(74) Representative: Katérle, Axel

(56) References cited:
- WO-A1-03/045099
- US-A1- 2003 023 726
- US-B1- 6 311 069
- US-B1- 6 463 289
- "Secure User Plane Location Architecture Draft Version 1.0 ? 23 Feb 2004 ; OMA-LOC_SUPL_AD-V1_0-20040223-D" ANNOUNCEMENT OPEN MOBILE ALLIANCE, XX, XX, 23 February 2004 (2004-02-23), pages 1-22, XP002484690

## Description

### Technical Field

The present invention relates to a privacy service in a mobile communications system, and particularly, to a privacy management apparatus and method based upon a user location for a Secure User Plane Location (SUPL) network.

### Background Art

In general, in order to provide location services to a user, considerable signalling and location information should be transferred between a mobile terminal and a location server. The so-called 'positioning technologies' that have been standardized for providing such location services, for instance; a location service based upon the location (position) of a mobile device, are undergoing rapid widespread dissemination.

The positioning technologies can be provided through a user plane and a control plane. A Secure User Plane Location (SUPL) protocol of the Open Mobile Alliance (OMA), which is well-known as an example of the positioning technologies, provides the location services through the user plane.

The SUPL protocol is an efficient method for transferring location information required for the location calculation of a mobile station. The SUPL protocol employs a user plane data bearer so as to transfer positioning assistance information such as Global Positioning System (GPS) assistance, and to carry positioning technology associated protocols between the mobile terminal and a network.

In general, a SUPL network for providing the location services includes a SUPL agent, SUPL Location Platform (SLP) and SUPL Enabled Terminal (SET).

The SUPL agent refers to a logical service access point using location information which is actually measured. The SLP refers to a SUPL service access point at a network portion where network resources are accessed to obtain location information. The SET refers to a device for communicating with the SUPL network, for instance, a User Equipment (UE) of the UMTS, a Mobile Station (MS) of GSM, a IS-95 MS, or the like. The SET supports various procedures defined by the SUPL protocol by being connected to the network through the user plane bearer.

However, in a SUPL network structure, only the functions of each SUPL device have been suggested thus far, while a signal transfer system between each SUPL device for transferring location information is still being discussed. In particular, various privacy authorization (management) services according to a user location and a condition establishment have not yet been provided.

"Secure User Plane Architecture", Open Mobile Alliance, draft version 1.0, may be construed to disclose a method and apparatus for processing location information by a Secure User Plane Location protocol location platform (SLP) according to the preambles of claims 1, 7 and 14.

WO 03/045099 A1 may be construed to disclose a user privacy management method (and the related apparatuses) comprising receiving, from a terminal, an Initiation message comprising a privacy reference, and calculating, at the network, the location of the terminal.

US patent 6,463,289 B1 may be construed to disclose a user privacy management method (and the related apparatuses) comprising calculating, at the network, the location of the terminal, and sending, from the network to the terminal, a notification message if privacy information of the terminal indicates that location is permitted, wherein the notification message comprises a notification element, and wherein the notification message is used to query the user for location permission.

US 2003/0023726 A1 may be construed to disclose a user privacy management method (and the related apparatuses) comprising sending, from the network to the terminal, a notification message if privacy information of the terminal is present, and querying the terminal for authentication information.

### Technical Problem

Therefore, an object of the present invention is to provide a user privacy management apparatus and method based on users' locations.

According to another object of the present invention, there is provided a user privacy management apparatus and method in which when a third party requests positioning of a specific user, a user can check whether to transmit the positioning of the corresponding user.

According to still another object of the present invention, there is provided a user privacy management apparatus and method capable of allowing a user to check application of each privacy rule when different privacy rules are adapted according to locations of users.

According to yet another object of the present invention, there is provided a user privacy management apparatus and method in which a SUPL 1Location Platform (SLP) for managing calculation of a location is divided into a SUPL Location Center (SLC) and the SUPL Positioning Center (SPC) and thus a location calculating process can be performed by directly connecting a SUPL Enabled Terminal (SET) and the SPC.

### Technical Solution

There are provided an SET according to claim 14 and corresponding methods according to claims 1 and 7. Developments are set forth in the respective dependent claims.

The foregoing and other objects, features, aspects and advantages of the present invention will become more apparent from the following detailed description of the present invention when taken in conjunction with the accompanying drawings.

### Description of Drawings

The accompanying drawings, which are included to provide a further understanding of the invention, illustrate embodiments of the invention and together with the description serve to explain the principles of the invention.

In the drawings:
Fig. 1 illustrates a first embodiment of a user privacy management method in a mobile communications system according to the present invention;
Fig. 2 illustrates a location privacy checking service which a SLP performs with a SPE (i.e., Privacy Checking Entity);
Fig. 3 illustrates a format of a location privacy assertion request message according to the present invention;
Fig. 4 illustrates a second embodiment of a user privacy management method In a mobile communications system according to the present Invention;
Fig. 5 illustrates a third embodiment of a user privacy management method in a mobile communications system according to the present invention;
Fig. 6 illustrates a fourth embodiment of a user privacy management method in a mobile communications system according to the present invention; and
Fig. 7 illustrates a fifth embodiment of a user privacy management method in a mobile communications system according to the present invention.

### Mode for Invention

The present invention may be Implemented for a SUPL network. However, the present invention may be applicable to radio (wireless) communications systems which are operated according to other specifications. Hereinafter, reference will now be made in detail to the preferred embodiments of the present invention, examples of which are illustrated in the accompanying drawings.

Many users desire that different privacy policies be applied according to the current locations of their terminals. That is, a user may want to receive a positioning request (attempt) notification based on a current location of his terminal so as to restrict the accessing of location information. For instance, a user can grant permission to a third party for positioning of his terminal when at home, but may require positioning request (attempt) notification be performed when he is at work in his office. Therefore, the terminal user can grant or deny the positioning request made by the third party when the terminal user is physically located within an area defined by his user privacy profile. Thus, various privacy rules may be applied differently according to the user who requests positioning and a location of the SET (e.g., home, office, etc.) in a mobile communications system, such as a SUPL network. Therefore, if the SET is located within a specific area, before the location of the SET is reported to a user who requests positioning, an appropriate privacy checking procedure is performed according to the corresponding user and the location of the SET. Preferably, the SET, being a device capable of communicating with the SUPL network, may be one of a User Equipment (UE) for UMTS, a Mobile Station (MS) for GSM, a IS-95 MS or the like. In the present invention, the SET will also be simply referred to as a terminal.

The present invention proposes a user privacy management apparatus and method by which, when a third party (i.e., a client system) requests the positioning of a SET, an application (i.e., a server system) notifies a positioning request to the SET user so as to obtain reporting authorization, and thereafter transmits the position of the SET to the third party.

It may also be possible for a target SET to authorize positioning attempts after the target SET is notified of a positioning request, and the target SET then grants permission for positioning. It shall also be possible to make the notification conditional on the current location of the target SET. In this case, the notification shall be performed after the target SET is positioned, but before reporting the location of the target SET to a LCS (location services) client. This notification condition (i.e., notification with privacy verification) shall be specified in the Target UE Subscription Profile.

It shall be possible for location services to support conditional reporting if the target SET is within specific geographical areas. Under these conditions, an application that grants conditional positioning authorization must notify and obtain positioning authorization from the user of the target SET, after the positioning process is performed but before reporting the location of the target SET to the LCS client.

If the target subscriber notification is set as 'notification with verification', each positioning request from the LCS Client or the service shall be notified to the target SET before positioning. If the target subscriber notification is set as 'notification with verification based on current location', positioning requests from the LCS client or the service shall be notified to the target SET after positioning is performed if the current location of the target SET is within the areas specified to require notification. The treatment for location request from the LCS client or service, which is not registered in a privacy exception list, shall also be specified in the privacy exception list. An empty privacy exception list shall signify an intent to withhold the location from all LCS Clients.

In the user privacy management apparatus according to the present invention, when the LCS client requests positioning of the target SET, a SUPL Location Platform (SLP) calculates the location of the target SET. After completing his calculation, the SLP confirms the privacy information of the target SET with an external Privacy Checking Entity (PCE), and then transmits the location of the target SET to the LCS client immediately or after obtaining a reporting authorization of the SET user.

The PCE is connected to the SLP, and may include privacy information according to regions and users who request positioning as shown in the following Table 1.

**Table 1**

| No. | User | Region | Grant |
|---|---|---|---|
| Case 1 | A | | Always granted |
| Case 2 | B | | Conditionally granted |
| Case 3 | C | I | Always granted |
| Case 4 | C | II | Conditionally granted |

Referring to Table 1, in the PCE, as can be noted in case 1 and case 2, an information provisioning can be set differently according to users (A or B) who request positioning of the SET, while, as can be noted in case 3 and case 4, information provisioning can be set differently according to regions (I and II) for a single user (C). Here, the information provisioning indicates reporting a location of the target client (SET or UE) to the LCS client (or SUPL agent).

The privacy information shown in Table 1 is just exemplary, and thus, various other types of privacy information may be included therein.

Hereinafter, a user privacy management method in a user privacy management apparatus of a mobile communications system according to the present invention will now be explained more detail.

In general, SUPL location services may be classified into a network-initiated service and a SET-initiated service.

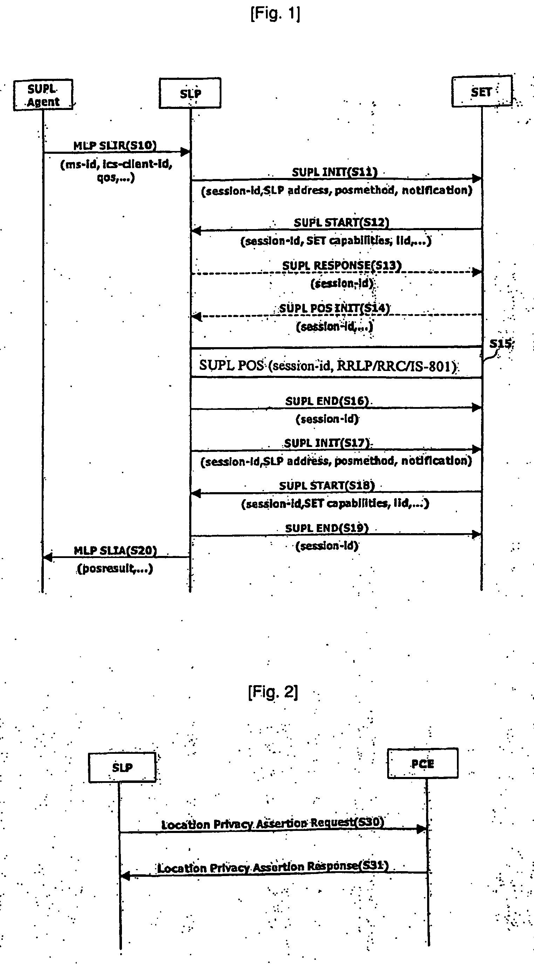

Fig. 1 illustrates a user privacy management method according to the present invention, whereby a SUPL call flow for an immediate positioning attempt by a network is shown. Here, the SLP corresponds to a network side and the SET corresponds to a terminal side.

Referring to Fig. 1, when the LCS client requests positioning of the SET to a SUPL agent within the network, the SUPL agent transfers the positioning request of the LCS client to the SLP using a Mobile Location Protocol (MLP) Standard Location Immediate Request (SLIR) message (S10). The MLP SLIR message can include ms-id, lcs-client-id, QoS, and the like.

Based upon the received Ics-client-id, the SLP checks whether the SUPL agent is authorized for location service, and performs a subscriber privacy checking for the LCS client on the basis of the ms-id and the Ics-client-id.

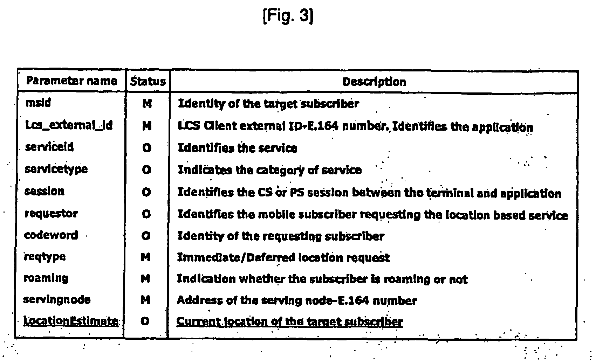

In other words, as illustrated in Fig. 2, the SLP transmits a location privacy assertion request message to an external Privacy Checking Entity (PCE), and thus requests the PCE to check whether the LCS client is a user who has been authorized for positioning (i.e., location tracking) by using the privacy information (S30). Fig. 3 shows a location privacy assertion request message format. If the LCS client is a positioning-granted user (i.e., a user who has allowed location tracking to be performed thereon), the location privacy assertion request message does not includes a 'locationEstimate' parameter.

Afterwards, when a decision as to whether permission for positioning should be granted or not is confirmed through a location privacy assertion response message (S31), the SLP checks whether the SET supports the SUPL protocol. Thereafter, the SLP transmits a session initialization message (SUPL INIT message) to initiate a SUPL session with the SET (S11).

At this time, as shown in Table 1, because the privacy information of case 1 and case 2 are set according to the users, the SLP does not include notification components within the SUPL INIT message when the positioning of the SET is always granted to the user, such as user A. Conversely, when the positioning of the SET is conditionally granted to a user, such as user B, the SLP includes the notification components within the SUPL INIT message for transmission, to thereby query to the SET as to whether the location of the SET is to be transmitted to the LCS client (i.e., user B). Also, the SUPL INIT message can include a session id, a SLP address, a location measuring method (posmethod), and the like.

When the SUPL INIT message is received from the SLP and if notification components are included therein, the SET includes positioning authorization of the SET user for the positioning request in a session start message (SUPL START message), and thereafter starts the SUPL session with the SLP (S 12). The SUPL START message includes at least a session-id, SET capabilities, and location identifier (lid). The SET capabilities include location-measuring methods that can be supported (e.g., MS assist A-GPS and MS based A-GPS, and cell-id method) and associated location-measuring protocols (e.g., RRLP, RRC, and IS-801). The SET capabilities can additionally include SUPL Extended flow elements, such as Reduced Flow, Extended Flow, and Both Flows. In addition, the SET may further provide NMR for radio (wireless) technologies to be used (e.g., GSM: TA, and RXLEV).

When the SUPL START message is received from the SET, the SLP examines the SUPL START message and determines which location-measuring protocol (e.g., RRLP, RRC, and IS-801) is to be used. If the SET capability included in the SUPL START message indicates the Extended Flow and the SLP supports the Extended Flow, the SLP sends a SUPL RESPONSE message to the SET. However, if the SET capability indicates the Extended Flow, but the SLP does not support the Extended Flow, the SLP transmits a SUPL END message to the SET to thusly transfer an appropriate error indication to the SET.

If the SET capability indicates the Extended Flow, the SLP transmits a SUPL POS message including an initial message to the SET to start the positioning process. Conversely, the SET capability indicates Both Rows in the SUPL START message, the SLP transmits a SUPL RESPONSE message or determines whether to start the positioning process.

If the SLP determines to use the Extended Flow on the basis of its capability and the SET capability, the SLP transmits the SUPL REPONSE message to the SET (S 13). When the SUPL REPONSE message is received, the SET transmits a SUPL POS INIT message to the SLP (S 14). At this time, the SET can include a first SUPL POS element in the SUPL POS INIT message. That is, the SLP notifies the SET of its capability through the SUPL RESPONSE message, and the SET transmits the SUPL POS INIT message to thusly allow the SLP to initiate the positioning protocol session.

Therefore, when the SUPL START message or the SUPL POS INIT message from the SET is inputted, the SLP starts the SUPL positioning process and calculates a current location of the SET (S 15). In this case, the SLP or the SET can sequentially exchange SUPL positioning process messages (e.g., RRLP/RRC/TIA-801) several times using the SUPL POS message. Here, the SLP can calculate the location of the SET by receiving measurements from the SET (MS Assisted), or the SET can directly calculate its location using assistance obtained from the SLP (MS Based). If the SET directly calculates its location, the location can be calculated by a location sensor installed within the SET (e.g., a location calculating unit by GPS or Cell-id).

Upon calculating the location of the SET by the SUPL positioning process, the SLP transmits the SUPL END message to the SET to notify the termination of the SUPL session (S 16). Also, the SLP transmits the location privacy assertion request message to the external PCE, and thus requests the PCE to check whether the LCS client is a user whose positioning is granted based on the calculated location of the SET (S30). In this case, the location privacy assertion request message may include a 'locationEstimate' parameter. Afterwards, if it is confirmed whether the positioning is granted through the location privacy assertion response message (S31), the SLP queries to the SET user as to whether the location of the SET should be transmitted to the LCS client according to the confirmation result (S 17).

Therefore, for the positioning request from user A and user B (case 1 and case 2), the SLP transmits, via a MLP Standard Location Immediate Answer (SLIA) message, the location of the SET to the corresponding LCS client (user A or user B) immediately after positioning according to the confirmation result of the PCE. At this time, the SET releases all resources associated with the SUPL-session.

However, as shown in Table 1, the condition information, namely, privacy information for the user C has been differently set on the basis of region I and region II (case 3 and case 4). Therefore, according to the confirmation result of the PCE, the SLP transmits the current location of the SET to the user C who has requested the positioning. For instance, because the positioning by the user C in region I is set as 'always granted', the SLP transfers the location of the SET immediately to the SUPL agent without any reporting authorization of the SET user when the location of the SET is calculated.

Conversely, because the positioning by user C in region II is set as 'conditionally granted', the SLP queries to the SET user once again as to whether to transmit the location of the SET to user C when the location of the SET is calculated. At this time, contents queried to the user are transmitted through the notification components of the SUPL INIT message.

In another embodiment of the present invention, the SLP transmits the location privacy assertion request message to the external PCE after the step S10, such that the privacy information itself can be requested. In this case, the PCE transmits the privacy information of the SET to the SLP through the location privacy assertion response message. Therefore, the SLP uses the privacy information without transmitting the location privacy assertion request message back to the PCE, so as to facilitate the checking of whether to grant permission for positioning of the LCS client based on the location of the SET.

Accordingly, when the SUPL START message including the reporting authorization is transmitted from the SET in response to the SUPL INIT message (S 18), if the SET user grants permission for transmissions of the positioning resultant value (i.e., the calculated current location of the SET), the SLP transmits the SUPL END message to the SET (S 19), and transmits the MLP SLIA message including the location of the SET to the SUPL agent, so that the current location of the SET can be transferred to the LCS client (S20).

As aforementioned, in the present invention, when the privacy authorization is based on the location of the SET according to the privacy information stored in the PCE (case 4), the SLP, as described in the step S17, transmits the SUPL INIT message so as to ask the SET user once again as to whether the location of the SET should be transmitted.

However, as illustrated in Fig. 1, when the SLP queries to the SET user again as to whether the location of the SET should be transmitted, because all the resources of the SET have already been released by the SUPL END message, the SLP should reallocate the radio (wireless) resources by transmitting the SUPL INIT message. Therefore, in case that the privacy authorization is based on the current location of a target user, as illustrated in Fig. 1, because the radio resources should be re-allocated using the SUPL INIT message, a time delay and waste of radio resources may occur.

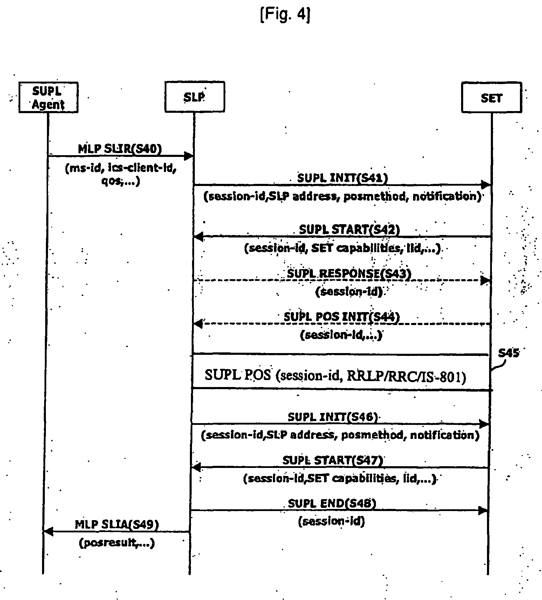

Therefore, in a user privacy management method according to a second embodiment of the present invention, as illustrated in Fig. 4, if the transmission of the location of the SET for a specific region is set as 'conditionally granted' (case 4), the SLP transmits the SUPL INIT message to the SET immediately after the SUPL positioning process (S45), and thusly queries to the SET user as to whether the location of the SET should be transmitted (S46). Afterwards, when the SLP obtains the reporting authorization from the SET user through the SUPL START message, the SLP transmits the SUPL END message to the SET. As a result, the SLP releases all resources associated with the SUPL session (547 and S48), thus, the SLP transmits to the SUPL agent, the positioning resultant value, namely, the MLP SLIA message including the current location of the SET (S49). For all other portions in Fig. 4, which are similar to those shown in Fig. 1, detailed explanations therefor have been omitted to prevent the differences between Figures 1 and 4 from being obscured.

Meanwhile, as illustrated in Figs 1 and 4, in the present invention, a new dedicated message can be used instead of re-using the SUPL INIT message in order to query the user who has requested an additional notification, namely, asking whether or not the positioning resultant value (the current location of the SET) should be transmitted.

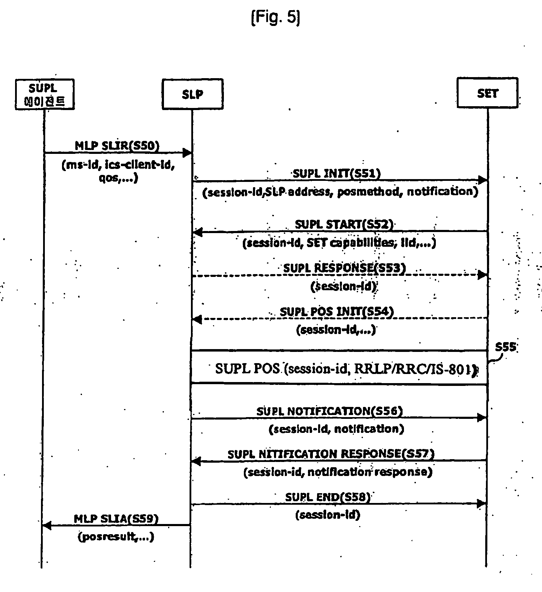

Fig. 5 illustrates a user privacy management method in a mobile communications system according to a third embodiment of the present invention, in which the SET user is queried about whether the positioning resultant value should be transmitted by using a new dedicated message. Preferably, the dedicated message is a session notification (SUPL NOTIFICATION) message.

Referring to Fig. 5, in the third embodiment of the present invention, for an additional notification, a SUPL NOTIFICATION message and a SUPL NOTIFICATION RESPONSE message are used instead of the SUPL INIT and SUPL START messages. For all other portions in Fig. 5, which are similar to those shown in Fig. 4, detailed explanations therefor have been omitted to prevent the differences between Figures 4 and 5 from being obscured.

The SLP can know whether to grant permission for positioning of user C (case 4) having requested for positioning on the basis of the confirmation result transmitted from the PCE or privacy information having received from the PCE. As a result, when the SUPL positioning process (S55) is terminated, the SLP transmits the SUPL NOTIFICATION message to the SET when the SET is located in region II, and thus queries the SET user once again as to whether the current location of the SET is to be transmitted to user C (S56). At this time, the SUPL NOTIFICATION message may include only a session-id and the notification components. Here, contents queried to the user are transmitted through the notification components of a SUPL NOTIFICATION RESPONSE message.

The SET transmits the SUPL NOTIFICATION RESPONSE message, including the reporting authorization of the user, in response to the SUPL NOTIFICATION (S57). The SLP recognizes the intention of the user from the corresponding SUPL NOTIFICATION RESPONSE message and thereafter transmits the SUPL END message to the SET. As a result, the SLP notifies the SET that the positioning process is not to be initiated any more and that the SUPL session has been terminated (S58). Also, the SLP transmits the MLP SLIA message, including the calculated location information of the SET, to the SUPL agent (S59). Therefore, the SET releases all resources associated with the SUPL session.

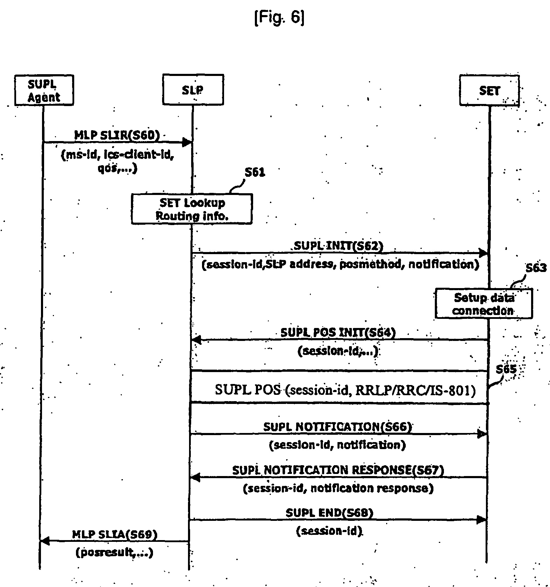

Fig. 6 illustrates a user privacy management method of a mobile communications system according to a fourth embodiment of the present invention. In the fourth embodiment, a process for confirming a SUPL privacy in which the SUPL message is transmitted and received without any distinction between the Reduced Row and the Extended Row is explained. Referring to Fig. 6, a detailed explanation of those elements having the same reference numerals as those of Fig. 5 have been omitted to ensure that the features of Fig. 6 are not obscured.

As illustrated in Fig. 6, when the LCS agent requests the positioning of the SET to the SUPL agent within a network, the SUPL agent transfers the positioning request of the LCS client to the SLP through the MLP SLIR message (S60). The MLP SLIR message can include a ms-id, Ics-client-id, QoS, and the like.

The SLP checks whether the SUPL agent is authorized for location services on the basis of the received Ics-client-id, and then checks from the external PCE whether the LCS client is granted for the positioning on the basis of the ms-id and the Ics-client-id. As aforementioned, the SLP can perform these checking processes by requesting to the PCE or directly receiving the privacy information from the PCE.

Furthermore, the SLP determines whether the SET supports the SUPL using a SET look-up table, and, if necessary, the SLP confirms whether the SET currently belongs to a service region using routing information (S61).

Upon checking the SUPL agent authorization and permission for the positioning of the LCS client, the SLP transmits the SUPL INIT message to the SET, and initiates the SUPL positioning session with the SET (S62). At this time, when the positioning is set as 'conditionally grated' as in case 2 and case 4, on the basis of users and/or regions, the SLP includes the notification components in the SUPL INIT message. Accordingly, the SLP can query to the SET user as to whether to grant permission for positioning (in particular, a query based on regions can further be performed upon receiving privacy information). The SUPL INIT message can include a session-id, SLP address, positioning method (posmethod), and the like.

When the SUPL INIT message is received from the SLP, the SET is connected to a packet data network (e.g., a 3GPP or 3GPP2 network) when data connection is currently not opened (set) to any network (data connection setup) (S63). The SET then transmits the SUPL POS INIT message including the positioning authorization of the SET user to the SLP, to thus initiate a positioning protocol session with the SLP (S64). The SUPL POS INIT message may include at least a session-id, SET capabilities and location identifier (lid). The SET capabilities may include location measuring methods (e.g., MS assist A-GPS, MS based AGPS, and cell-id method) and associated location measuring protocols (e.g., RRLP, RRC, and IS-801). Also, the SET can further provide NMR for radio (wireless) technologies (e.g., GSM:TA, and RXLEV) to be used.

When the SUPL POS INIT message is received from the SET, the SLP examines the SUPL POS INIT message and recognizes the positioning authorization of the SET user, thereby determining which location measuring protocol (RRLP, RRC, and IS-801) should be used. Therefore, the SLP starts the SUPL positioning process according to the SUPL POS INIT message. The SLP or the SET sequentially exchanges SUPL positioning process messages (RRLP, RRC, and IS-801) several times, using the SUPL POS message (S65). In the SUPL positioning process, the location is calculated on the basis of measurements that the SLP has received from the SET (MS assisted), or assistance that the SET has-obtained from the SLP (MS based). At this time, when the SET calculates its location, the location can be calculated by a location sensor mounted within the SET (e.g., a location calculating unit by GPS or Cell-id).

When the positioning process is completed, the SLP checks whether to grant permission for positioning of a user who has requested the positioning on the calculated location of the SET, by requesting an additional checking to the PCE or by using privacy information received from the PCE. According to the checked result, for cases 1, 2, arid 3 in Table 1, the SLP transfers the calculated location of the SET to the SUPL agent through the MLP SLIA message, while, for case 4, the SLP transmits the SUPL NOTIFICATION message to the SET to query again whether to transmit the location, thereafter transferring the location to the SUPL agent (S66 to S69).

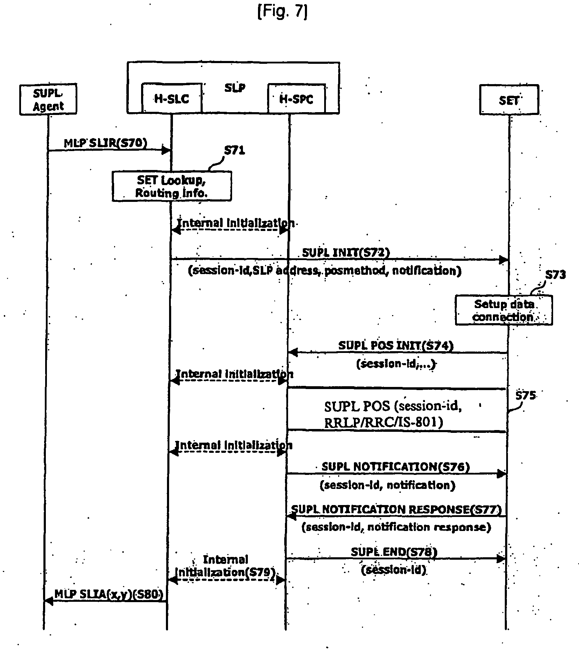

Fig. 7 illustrates a user privacy management method according to a fifth embodiment of the present invention.

The fifth embodiment of the present invention shows a SUPL message transmission process for a case of performing a privacy management by dividing the SLP (Home SLP) into a SUPL Location Center (SLC) and a SUPL Positioning Center (SPC) according to their functional aspects. The SLP, as a network component, may include a SPC which is an entity for calculating an actual location and a SLC for managing other functions of the SLP excluding the function for calculating location information, for instance, roaming, resource managing, and the like.

That is, the fifth embodiment corresponds to an example in which the SLP is divided into the SPC for calculating a location by exchanging messages with the actual SET, and the SLC for performing other functions of the SLP excepting the function for calculating the location information, so that the SPC performs the positioning process directly with the SET and an information transfer between the SPC and the SLC is performed through an internal communication.

Referring to Fig. 7, when the LCS client requests positioning of a terminal to the SUPL agent within the network, the SUPL agent transfers the positioning request to the H-SLC (Home-SLC) through the MLP SLIR message (S70). The MLIP SLIR message includes a ms-id, Ics-client-id, qos, and the like.

The H-SLC authorizes the SUPL agent according to the received Ics-client-id and checks a user privacy for the Ics-client-id according to the ms-id, that is, checks whether to grant permission for positioning for the LCS client from the external PCE. The SLP, as aforementioned, can perform these checking processes by requesting to the PCE or directly receiving privacy information from the PCE. In addition, the SLC determines whether the SET supports the SUPL using a SET look-up stable. If necessary, the SLC checks whether the SET currently belongs to a service region using routing information (S71). When these series of operations are completed, the H-SLC notifies the H-SPC of the privacy information and of which the SUPL POS process preparation is to be initiated through an internal initialization with the H-SPC (S72).

Upon checking of the SUPL agent authorization and whether to grant permission for positioning of the LCS client, the H-SLC transmits the SUPL INIT message to the SET to thusly initiate the SUPL session with the SET (S73). Here, the H-SLC includes the notification components in the SUPL INIT message for transmission according to the privacy information (case 2 and case 4). The SUPL INIT message can include a session-id, SLP address, positioning measuring method (posmethod), and the like. When the SUPL INIT message is received from the H-SLC of the SLP, if a data connection is not currently opened (e.g., set) even to any network, the SET is connected to a packet data network (i.e., a 3GPP or 3GPP2 network) (data connection setup) (S74). The SET then estimates (approximates) various notification rules and thus transmits the SUPL POS INIT message to the H-SPC of the SLP for taking an appropriate action, namely, initiating the positioning session (S75). The SUPL POS INIT message may include at least a session-id, SET capabilities, and location identifier (lid). The SET capabilities include supported location-measuring methods (e.g., MS assist A-GPS and MS based A-GPS, and cell-id method) and associated location-measuring methods (e.g., RRLP, RRC, and IS-801). Also, the SET may further provide NMR for radio technologies (e.g., GSM:TA and RXLEV) to be used.

When the SUPL POS INIT message is received from the SET, the H-SPC examines the SUPL POS INIT message so as to determine which location measuring protocol (RRLP, RRC, and IS-801) should be used. The H-SPC then checks whether the location identifier (lid) satisfies the QoS (Quality of Service) required from the SUPL agent. If the lid satisfies the QoS required from the SUPL agent, the H-SPC immediately performs the operations after the step (S78) without performing the positioning process (SUPL POS). If the lid does not satisfy the QoS, the H-SPC sequentially exchanges the positioning process messages (RRLP/RRC/TIA-801) with the SET several times to thusly perform the positioning process (S77).

Therefore, the H-SPC or SET calculates the location of the SET through the SUPL positioning process messages for the positioning. The location of the SET can be calculated on the basis of measurements that the SLP has received from the SET (MS Assisted), or through assistance that the SET has obtained from the SLP (MS based). At this time, when the SET calculates the location thereof, the location can be calculated by a location sensor mounted in the SET (e.g., location calculating unit by GPS or Cell-id).

When the location of the SET is completely calculated, the H-SPC checks whether to grant permission for positioning of the use having requested the positioning on the calculated location of the SET, by requesting an additional checking to the PCE or using privacy information received from the PCE. Therefore, according to the checked result, the H-SPC transfers the calculated location of the SET directly to the H-SLC through an internal communication so as to be transferred to the SUPL agent (S78) (for case 1, 2, and 3), or transfers to the H-SLC through the internal communication after performing those steps of S79 to S81 (S83) (for case 4).

As described so far, when the privacy authorization is based on the actual location of a terminal, the terminal user is notified of application of the privacy setup for confirmation, so that the user privacy can effectively be managed in a more stable manner.

In addition, by dividing the SLP for managing the positioning into SPC and SLC, the location calculating process is performed by directly connecting the SET and the SPC, which results in reduction of signalling in the related art SLC and facilitation of adding a new function (upgrade).

## Claims

1. A method for processing location information by a Secure User Plane Location protocol location platform, SLP, wherein the method comprises:
receiving (S10; S40; S50; S60; S70) a positioning request message for a Secure User Plane Location protocol enabled terminal, SET, from a client, wherein the positioning request message comprises a client identification;
transmitting (S11; S41; S51; S62; S72), to the SET, a Secure User Plane Location protocol initiation message comprising a positioning method element;
receiving (S12; S42; S52; S64; S74), from the SET, a Secure User Plane Location protocol positioning initiation message comprising a terminal capability element to start a positioning session with the SET, wherein the terminal capability element identifies location measuring methods supported by the SET;
exchanging (S13, S14; S43; S44; S53, S54) positioning process messages between the SLP and the SET;
calculating (S15; S45; S55; S65; S75), at the SLP, the location of the SET in cooperation with the SET using the positioning process messages;
sending (S17; 546; 556; 566; S76), from the SLP after the calculating to the SET, a notification message if privacy information of the SET indicates that notification is conditional on a current location of the SET, wherein the notification message comprises a notification element, wherein the notification message is used to query whether the calculated location should be provided to the client;
receiving (S18; 547; 557; S67; S77), at the SLP from the SET in response to the notification message, a response message containing a notification response with respect to the query whether the calculated location should be provided to the client; and
sending (S20; S49; S59; S69; S80) a response message to the client in response to the positioning request message if the notification response indicates that the calculated location should be provided to the client, wherein the response message comprises the calculated location of the SET.

2. The method of claims 1, wherein the sending of the notification message is performed using a session initialization message or a session notification message, and is performed through a session for calculating the location of the SET or another new session.

3. The method of claim 1, wherein the privacy information is determined by:
requesting an external Privacy Checking Entity, PCE, to check whether the client is permitted to receive the calculated location; and
receiving a response result from the PCE.

4. The method of claim 1, wherein the client is a user of a mobile communication system and the notification message is a Secure User Plane Location protocol Notify message and the response message is a Secure User Plane Location protocol Notify Response message that indicates a grant or deny of the positioning request of the SET.

5. The method of claim 1, further comprising:
authenticating a Secure User Plane Location protocol Agent based upon the client identification in the received positioning request message.

6. A method for processing location information by a Secure User Plane Location protocol enabled, SET terminal, wherein the method comprises:
receiving (S11; S41; S51; S62; S72), from a network, a Secure User Plane Location protocol initiation message comprising a positioning method element;
sending (S12; 542; S52; S64; 574) a Secure User Plane Location protocol positioning initiation message comprising a terminal capability element to start a positioning session with the network, wherein the terminal capability element identifies location measuring methods supported by the SET;
exchanging (S13, S14; 543; 544; 553, S54) positioning process messages between a Secure User Plane Location protocol location platform, SLP, and the SET;
calculating (S15; S45; S55; 565; S75) the location of the SET in cooperation with the SLP using the positioning process messages;
receiving (S17; 546; S56; S66; S76), after the calculating from the SLP, a notification message if privacy information of the SET indicates that notification is conditional on a current location of the SET, wherein the notification message comprises a notification element, wherein the notification message is used to query whether the calculated location should be provided to a client; and
sending (S18; 547; 557; S67; S77), to the SLP, a response message containing a notification response with respect to the query whether the calculated location should be provided to the client, wherein the response message is sent in response to the notification message.

7. The method of claim 6, wherein the notification message is a Secure User Plane Location protocol Notify message and the response message is a Secure User Plane Location protocol Notify Response message that indicates a grant or deny of the request for location information of the SET.

8. The method of claim 6, wherein the client is a user of a mobile communication system and the notification message is a Secure User Plane Location protocol Notify message and the response message is a Secure User Plane Location protocol Notify Response message that indicates a grant or deny of the positioning request of the SET.

9. The method of claim 6, wherein the location measuring methods comprise terminal assisted global positioning system, A-GPS, terminal based A-GPS, and cell-id,

10. The method of claim 6, wherein the sending of the notification message is performed using a session initialization message or a session notification message and is performed through a session for calculating the location of the SET or another new session.

11. The method of claim 6, wherein the privacy information is determined by:
requesting an external Privacy Checking Entity, PCE, to check whether the client is permitted to receive the calculated location; and
receiving a response result from the PCE.

12. A Secure User Plane Location protocol enabled terminal, SET, for processing location information, wherein the SET comprises:
a transceiver adapted to receive, from a network, a Secure User Plane Location protocol initiation message comprising a positioning method element;
a processor, cooperating with the transceiver, adapted to, send a Secure User Plane Location protocol positioning initiation message comprising a terminal capability element to start a positioning session with the network, wherein the terminal capability element identifies location measuring methods supported by the SET; exchange positioning process messages between a Secure User Plane Location protocol location platform, SLP, and the SET;
calculate the location of the SET in cooperation with the SLP using the positioning process messages;
receive, after calculating from the SLP, a notification message if privacy information of the SET indicates that notification is conditional on a current location of the SET, wherein the notification message comprises a notification element, wherein the notification message is used to query whether the calculated location should be provided a client; and
send, to the SLP, a response message containing a notification response with respect to the query whether the calculated location should be provided to the client, wherein the response message is sent in response to the notification message.

13. The SET of claim 12, wherein the notification message is a Secure User Plane Location protocol Notify message and the response message is a Secure User Plane Location protocol Notify Response message, and wherein receiving of the notification message is conditional on the current location of the SET.

## Patentansprüche

1. Verfahren zum Verarbeiten von Standortinformationen durch eine Standort-Plattform für ein Secure-User-Plane-Location-Protokoll, kurz SLP, wobei das Verfahren umfasst:
- Empfangen (S10; 540; 550; 560; 570) einer Ortungsanforderungsnachricht für ein Endgerät, welches für das Secure-User-Plane-Location-Protokoll befähigt ist, kurz SET, von einem Klienten, wobei die Ortungsanforderungsnachricht eine Klientenkennung enthält,
- Übermitteln (S11; S41; S51; 562; 572) einer ein Ortungsverfahrenselement enthaltenden Auslösenachricht des Secure-User-Plane-Location-Protokolls an das SET,
- Empfangen (S12; 542; 552; 564; 574) einer ein Endgerätefähigkeitselement enthaltenden Ortungsauslösenachricht des Secure-User-Plane-Location-Protokolls von dem SET, um eine Ortungssitzung mit dem SET zu beginnen, wobei das Endgerätefähigkeitselement Standortmessmethoden identifiziert, welche von dem SET unterstützt werden,
- Austauschen (S13, S14; S43; 544; S53, S54) von Ortungsverarbeitungsnachrichten zwischen der SLP und dem SET,
- Berechnen (S15; 545; 555; 565; 575) des Standorts des SET an der SLP in Kooperation mit dem SET unter Verwendung der Ortungsverarbeitungsnachrichten,
- Senden (S17; 546; 556; 566; 576) einer Benachrichtigungsnachricht von der SLP an das SET nach der Berechnung, sofern Privatheitsinformationen des SET angeben, dass die Benachrichtigung vom aktuellen Standort des SET abhängt, wobei die Benachrichtigungsnachricht ein Benachrichtigungselement enthält, wobei die Benachrichtigungsnachricht dazu verwendet wird zu erfragen, ob der berechnete Standort an den Klienten weitergeleitet werden soll,
- Empfangen (S18; 547; 557; 567; 577) einer Antwortnachricht, welche eine Benachrichtigungsantwort hinsichtlich der Frage enthält, ob der berechnete Standort an den Klienten weitergegeben werden soll, von dem SET an der SLP in Antwort auf die Benachrichtigungsnachricht, und
- Senden (520; 549; 559; 569; 580) einer Antwortnachricht an den Klienten in Antwort auf die Ortungsanforderungsnachricht, sofern die Benachrichtigungsantwort angibt, dass der berechnete Standort an den Klienten weitergegeben werden soll, wobei die Antwortnachricht den berechneten Standort des SET enthält.

2. Verfahren nach Anspruch 1, wobei das Senden der Benachrichtigungsnachricht unter Verwendung einer Sitzungsinitialisierungsnachricht oder einer Sitzungsbenachrichtigungsnachricht durchgeführt wird und durch eine Sitzung zur Berechnung des Standorts des SET oder eine andere neue Sitzung durchgeführt wird.

3. Verfahren nach Anspruch 1, wobei die Privatheitsinformationen ermittelt werden durch:
- Anfordern einer Prüfung, ob der Klient den berechneten Standort bekommen darf, bei einer externen Privatheitsprüfentität, kurz PCE, und
- Empfangen eines Antwortresultats von der PCE.

4. Verfahren nach Anspruch 1, wobei der Klient ein Nutzer eines Mobilkommunikationssystems ist und die Benachrichtigungsnachricht eine Notify-Nachricht des Secure-User-Plane-Location-Protokolls ist und die Antwortnachricht eine Notify-Response-Nachricht des Secure-User-Plane-Location-Protokolls ist, die eine Genehmigung oder Ablehnung der Ortungsanforderung des SET angibt.

5. Verfahren nach Anspruch 1, ferner umfassend ein Authentifizieren eines Agenten des Secure-User-Plane-Location-Protokolls auf Grundlage der Klientenkennung in der empfangenen Ortungsanforderungsnachricht.

6. Verfahren zum Verarbeiten von Standortinformationen durch ein Endgerät, welches für ein Secure-User-Plane-Location-Protokoll befähigt ist, kurz SET, wobei das Verfahren umfasst:
- Empfangen (511; S41; S51; S62; 572) einer ein Ortungsverfahrenselement enthaltenden Auslösenachricht des Secure-User-Plane-Location-Protokolls von einem Netzwerk,
- Senden (S12; S42; S52; 564; S74) einer ein Endgerätefähigkeitselement enthaltenden Ortungsauslösenachricht des Secure-User-Plane-Location-Protokolls, um eine Ortungssitzung mit dem Netzwerk zu beginnen, wobei das Endgerätefähigkeitselement Standortmessmethoden identifiziert, die von dem SET unterstützt werden,
- Austauschen (S13, S14; 543; 544; S53, S54) von Ortungsverarbeitungsnachrichten zwischen einer Standort-Plattform des Secure-User-Plane-Location-Protokolls, kurz SLP, und dem SET,
- Berechnen (S15; S45; S55; 565; S75) des Standorts des SET in Kooperation mit der SLP unter Verwendung der Ortungsverarbeitungsnachrichten,
- Empfangen (S17; S46; S56; S66; S76) einer Benachrichtigungsnachricht von der SLP nach der Berechnung, sofern Privatheitsinformationen des SET angeben, dass die Benachrichtigung vom aktuellen Standort des SET abhängt, wobei die Benachrichtigungsnachricht ein Benachrichtigungselement enthält, wobei die Benachrichtigungsnachricht dazu verwendet wird zu erfragen, ob der berechnete Standort an einen Klienten weitergegeben werden soll, und
- Senden (S18; 547; S57; S67; S77) einer Antwortnachricht, welche eine Benachrichtigungsantwort hinsichtlich der Frage enthält, ob der berechnete Standort an den Klienten weitergegeben werden soll, an die SLP, wobei die Antwortnachricht in Antwort auf die Benachrichtigungsnachricht gesendet wird.

7. Verfahren nach Anspruch 6, wobei die Benachrichtigungsnachricht eine Notify-Nachricht des Secure-User-Plane-Location-Protokolls ist und die Antwortnachricht eine Notify-Response-Nachricht des Secure-User-Plane-Location-Protokolls ist, welche eine Genehmigung oder Ablehnung der Anforderung für Standortinformationen des SET angibt.

8. Verfahren nach Anspruch 6, wobei der Klient ein Nutzer eines Mobilkommunikationssystems ist und die Benachrichtigungsnachricht eine Notify-Nachricht des Secure-User-Plane-Location-Protokolls ist und die Antwortnachricht eine Notify-Response-Nachricht ist, welche eine Genehmigung oder Ablehnung der Ortungsanforderung des SET angibt.

9. Verfahren nach Anspruch 6, wobei die Standortmessmethoden ein globales Ortungssystem mit Endgeräteassistierung, kurz A-GPS, ein endgerätebasiertes A-GPS sowie eine Zellen-ID umfassen.

10. Verfahren nach Anspruch 6, wobei das Senden der Benachrichtigungsnachricht unter Verwendung einer Sitzungsinitialisierungsnachricht oder einer Sitzungsbenachrichtigungsnachricht durchgeführt wird und durch eine Sitzung zur Berechnung des Standorts des SET oder eine andere neue Sitzung durchgeführt wird.

11. Verfahren nach Anspruch 6, wobei die Privatheitsinformationen ermittelt werden durch:
- Anfordern einer Prüfung, ob der Klient den berechneten Standort bekommen darf, bei einer externen Privatheitsprüfentität, kurz PCE, und
- Empfangen eines Antwortresultats von der PCE.

12. Endgerät mit Befähigung für ein Secure-User-Plane-Location-Protokoll, kurz SET, zur Verarbeitung von Standortinformationen, wobei das SET umfasst:
- einen Sender/Empfänger, welcher dazu eingerichtet ist, von einem Netzwerk eine ein Ortungsverfahrenselement enthaltende Auslösenachricht des Secure-User-Plane-Location-Protokolls zu empfangen,
- einen Prozessor, welcher mit dem Sender/Empfänger zusammenarbeitet und dazu eingerichtet ist:
- eine ein Endgerätefähigkeitselement enthaltende Ortungsauslösenachricht des Secure-User-Plane-Location-Protokolls zu senden, um eine Ortungssitzung mit dem Netzwerk zu beginnen, wobei das Endgerätefähigkeitselement Standortmessmethoden identifiziert, die von dem SET unterstützt werden,
- Ortungsverarbeitungsnachrichten zwischen einer Standort-Plattform des Secure-User-Plane-Location-Protokolls, kurz SLP, und dem SET auszutauschen,
- den Standort des SET in Kooperation mit der SLP unter Verwendung der Ortungsverarbeitungsnachrichten zu berechnen,
- nach der Berechnung von der SLP eine Benachrichtigungsnachricht zu empfangen, sofern Privatheitsinformationen des SET angeben, dass die Benachrichtigung vom aktuellen Standort des SET abhängt, wobei die Benachrichtigungsnachricht ein Benachrichtigungselement enthält, wobei die Benachrichtigungsnachricht dazu verwendet wird zu erfragen, ob der berechnete Standort an einen Klienten weitergegeben werden soll, und
- eine Antwortnachricht, welche eine Benachrichtigungsantwort hinsichtlich der Frage enthält, ob der berechnete Standort an den Klienten weitergegeben werden soll, an die SLP zu senden, wobei die Antwortnachricht in Antwort auf die Benachrichtigungsnachricht gesendet wird.

13. SET nach Anspruch 12, wobei die Benachrichtigungsnachricht eine Notify-Nachricht des Secure-User-Plane-Location-Protokolls ist und die Antwortnachricht eine Notify-Response-Nachricht des Secure-User-Plane-Location-Protokolls ist und wobei der Empfang der Benachrichtigungsnachricht vom aktuellen Standort des SET abhängt.

## Revendications

1. Procédé de traitement d'une information de localisation par une plate-forme de localisation sous protocole de Localisation de Plan d'Utilisateur Sécurisée, SLP, dans lequel le procédé comprend:
la réception (S10; S40; S50; S60; S70) d'un message de demande de positionnement pour un terminal sous protocole de Localisation de Plan d'Utilisateur Sécurisée, SET, provenant d'un client, dans lequel le message de demande de positionnement comprend une identification de client;
la transmission (S11; S41; S51; 562; S72), au SET, d'un message d'initialisation sous protocole de Localisation de Plan d'Utilisateur Sécurisée comprenant un élément de procédé de positionnement;
la réception (S12; 542; 552; S64; S74), du SET, d'un message d'initialisation de positionnement sous protocole de Localisation de Plan d'Utilisateur Sécurisée comprenant un élément de capacité de terminal à débuter une session de positionnement avec le SET, dans lequel l'élément de capacité de terminal identifie des procédés de mesure de localisation supportés par le SET;
l'échange (S13; S14; 543; S44; S53; S54) de messages de processus de positionnement entre la SLP et le SET;
le calcul (S15; S45; S55; 565; S75), au niveau de la SLP, de la localisation du SET en coopération avec le SET en utilisant les messages de processus de positionnement;
l'envoi (S17; S46; S56; 566; S76), de la SLP, après le calcul, au SET, d'un message de notification si une information de secret du SET indique qu'une notification est conditionnelle pour une localisation actuelle du SET, dans lequel le message de notification comprend un élément de notification, dans lequel le message de notification est utilisé pour demander si la localisation calculée doit être délivrée au client;
la réception (S18; S47; S57; 567; S77), au niveau de la SLP, du SET, en réponse au message de notification, d'un message de réponse contenant une réponse de notification pour ce qui concerne la demande si la localisation calculée doit être délivrée au client; et
l'envoi (S20; S49; S59; S69; S80) d'un message de réponse au client en réponse au message de demande de positionnement si la réponse de notification indique que la localisation calculée doit être délivrée au client, dans lequel le message de réponse comprend la localisation calculée du SET.

2. Procédé selon la revendication 1, dans lequel l'envoi du message de notification est effectué en utilisant un message d'initialisation de session ou un message de notification de session, et est effectué par l'intermédiaire d'une session pour calculer la localisation du SET ou d'une autre nouvelle session.

3. Procédé selon la revendication 1, dans lequel l'information de secret est déterminée par:
la demande à une Entité de Contrôle de Secret, PCE, externe de contrôler si le client est autorisé à recevoir la localisation calculée; et
la réception d'une réponse de résultat de la PCE.

4. Procédé selon la revendication 1, dans lequel le client est un utilisateur d'un système de communication mobile et le message de notification est un message de Notification de protocole de Localisation de Plan d'Utilisateur Sécurisée et le message de réponse est un message de Réponse à Notification de protocole de Localisation de Plan d'Utilisateur Sécurisée qui indique une autorisation ou un refus de la demande de positionnement du SET.

5. Procédé selon la revendication 1, comprenant en outre:
l'authentification d'un Agent de protocole de Localisation de Plan d'Utilisateur Sécurisée sur la base de l'identification du client dans le message de demande de positionnement reçu.

6. Procédé de traitement d'une information de localisation par un terminal sous protocole de Localisation de Plan d'Utilisateur Sécurisée, SET, dans lequel le procédé comprend:
la réception (S11; S41; S51; S62; S72), d'un réseau, d'un message d'initialisation sous protocole de Localisation de Plan d'Utilisateur Sécurisée comprenant un élément de procédé de positionnement;
l'envoi (S12; S42; S52; S64; S74) d'un message d'initialisation de positionnement sous protocole de Localisation de Plan d'Utilisateur Sécurisée comprenant un élément de capacité de terminal à débuter une session de positionnement avec le réseau, dans lequel l'élément de capacité de terminal identifie des procédés de mesure de localisation supportés par le SET;
l'échange (S13; S14; S43; S44; 553; S54) de messages de processus de positionnement entre une plate-forme de localisation sous protocole de Localisation de Plan d'Utilisateur Sécurisée, SLP, et le SET;
le calcul (S15; S45; S55; 565; S75) de la localisation du SET en coopération avec la SLP en utilisant les messages de processus de positionnement;
la réception (S17; S46; S56; 566; S76), de la SLP après le calcul, d'un message de notification si une information de secret du SET indique qu'une notification est conditionnelle pour une localisation actuelle du SET, dans lequel le message de notification comprend un élément de notification, dans lequel le message de notification est utilisé pour demander si la localisation calculée doit être délivrée à un client; et
l'envoi (S18; S47; 557; 567; S77), à la SLP, d'un message de réponse contenant une réponse de notification pour ce qui concerne la demande si la localisation calculée doit être délivrée au client, dans lequel le message de réponse est envoyé en réponse au message de notification.

7. Procédé selon la revendication 6, dans lequel le message de notification est un message de Notification de protocole de Localisation de Plan d'Utilisateur Sécurisée et le message de réponse est un message de Réponse à Notification de protocole de Localisation de Plan d'Utilisateur Sécurisée qui indique une autorisation ou un refus de la demande d'information de localisation du SET.

8. Procédé selon la revendication 6, dans lequel le client est un utilisateur d'un système de communication mobile et le message de notification est un message de Notification de protocole de Localisation de Plan d'Utilisateur Sécurisée et le message de réponse est un message de Réponse à Notification de protocole de Localisation de Plan d'Utilisateur Sécurisée qui indique une autorisation ou un refus de la demande de positionnement du SET.

9. Procédé selon la revendication 6, dans lequel les procédés de mesure de localisation comprennent un système mondial de positionnement assisté par terminal, A-GPS, un A-GPS basé sur terminal et un ID de cellule.

10. Procédé selon la revendication 6, dans lequel l'envoi du message de notification est effectué en utilisant un message d'initialisation de session ou un message de notification de session, et est effectué par l'intermédiaire d'une session pour calculer la localisation du SET ou d'une autre nouvelle session.

11. Procédé selon la revendication 6, dans lequel l'information de secret est déterminée par:
la demande à une Entité de Contrôle de Secret, PCE, externe de contrôler si le client est autorisé à recevoir la localisation calculée; et
la réception d'une réponse de résultat de la PCE.

12. Terminal sous protocole de Localisation de Plan d'Utilisateur Sécurisée, SET, pour traiter une information de localisation, dans lequel le SET comprend:
un émetteur-récepteur adapté à recevoir, d'un réseau, un message d'initialisation sous protocole de Localisation de Plan d'Utilisateur Sécurisée comprenant un élément de procédé de positionnement;
un processeur, coopérant avec l'émetteur-récepteur, adapté à
envoyer un message d'initialisation de positionnement sous protocole de Localisation de Plan d'Utilisateur Sécurisée comprenant un élément de capacité de terminal à débuter une session de positionnement avec le réseau, dans lequel l'élément de capacité de terminal identifie des procédés de mesure de localisation supportés par le SET;
échanger des messages de processus de positionnement entre une plate-forme de localisation sous protocole de Localisation de Plan d'Utilisateur Sécurisée, SLP, et le SET;
calculer la localisation du SET en coopération avec la SLP en utilisant les messages de processus de positionnement;
recevoir, de la SLP après le calcul, un message de notification si une information de secret du SET indique qu'une notification est conditionnelle pour une localisation actuelle du SET, dans lequel le message de notification comprend un élément de notification, dans lequel le message de notification est utilisé pour demander si la localisation calculée doit être délivrée au client; et
envoyer, à la SLP, un message de réponse contenant une réponse de notification pour ce qui concerne la demande si la localisation calculée doit être délivrée au client, dans lequel le message de réponse est envoyé en réponse au message de notification.

13. SET selon la revendication 12, dans lequel le message de notification est un message de Notification de protocole de Localisation de Plan d'Utilisateur Sécurisée et le message de réponse est un message de Réponse à Notification de protocole de Localisation de Plan d'Utilisateur Sécurisée, et dans lequel la réception du message de notification est conditionnelle pour la localisation actuelle du SET.
